# EUROPÄISCHE PATENTSCHRIFT

(11) **EP 1 144 736 B1**
(45) Veröffentlichungstag und Bekanntmachung des Hinweises auf die Patenterteilung: **25.08.2004**
(21) Anmeldenummer: 99965444.5
(22) Anmeldetag: 09.12.1999
(51) Int. Cl.: C30B 15/02, B22F 3/105, C01B 33/025, C30B 29/06, C30B 15/00

(54) **AGGLOMERATION VON SILICIUMPULVERN**
AGGLOMERATION OF SILICON POWDERS
AGGLOMERATION DE POUDRES DE SILICIUM

(30) Priorität: 22.12.1998 DE 19859288
(43) Veröffentlichungstag der Anmeldung: 17.10.2001
(73) Patentinhaber: GE Bayer Silicones GmbH & Co. KG, 40699 Erkrath (DE)
(72) Erfinder: ACKERMANN, Jürgen, D-51381 Leverkusen (DE); ARMBRUST, Ralph, D-51375 Leverkusen (DE); LANGE, Horst, D-44879 Bochum (DE); BLOCK, Hans-Dieter, D-51381 Leverkusen (DE); WEBER, Rainer, D-51519 Odenthal (DE); ZAQQA, Nadim, D-51061 Köln (DE); LAUBACH, Benno, D-47809 Krefeld (DE)
(86) Internationale Anmeldenummer: PCT/EP1999/009694
(87) Internationale Veröffentlichungsnummer: WO 2000/037719

(56) Entgegenhaltungen:
- EP-A- 0 203 518
- DE-A- 19 515 342
- FR-A- 1 133 343
- US-A- 5 499 598
- PATENT ABSTRACTS OF JAPAN vol. 017, no. 685 (C-1142), 15. Dezember 1993 (1993-12-15) & JP 05 229812 A (TOSHIBA CORP), 7. September 1993 (1993-09-07)

## Beschreibung

Die vorliegende Erfindung betrifft ein Verfahren zur Agglomeration von Siliciumpulvern sowie Siliciumgranulate, die nach diesem Verfahren herstellbar sind, und deren Verwendung.

Die chemische Umwandlung von metallischem Silicium zu Silanen oder umgekehrt die von Silanen zu Silicium wird vielfach in Wirbelbetten ausgeführt, so z.B. die Müller-Rochow-Reaktion, die Hydrochlorierung, die SiH₄-Zersetzung oder die HSiCl₃-Zersetzung (vgl. DE 36 38 931, DE 37 39 895, DE 43 27 308, US 5 382 412, US 4 883 687, US 4 784 840, US 3 963 838). Dabei schränken die aerodynamischen Anforderungen der Wirbelbett-Reaktoren die Korngröße der verwendbaren Pulver auf bestimmte Teilchendurchmesser ein. Nur in diesen ausgewählten Bereichen lassen sich die Vorteile von Wirbelbett-Reaktoren optimal verwirklichen (vgl. Y.G.Yates, "Fundamentals of Fluidized-bed Chemical Processes", Butterworths London 1983; E. Klar, "Copper Catalysts for the Direct Process", S.174, in Silicon for the Chemical Industry III, Sandefjord Norwegen 1996 - The Norwegian Univ. Sci.A.Tech., Trondheim S. 9-10).

Bei der Umsetzung von Si-Pulvern mit den Reaktanden verkleinern sich dabei die vorgelegten Partikel ständig weiter und verlieren ihren optimalen Durchmesser von > 40 µm. Hingegen ist man bei einem anderen Verfahren auf das Wachstum der Partikel während der Abscheidung von SiH₄ zu kompakten Si-Pulvern angewiesen, Korndurchmesser von mehr als 600 µm zu erzeugen. Da dies bei einer Abscheidung aus der Gasphase nicht ideal gelingt, müssen Pulverfraktionen unterhalb dieser Grenzen in Kauf genommen werden. Diese Feinstpulver erschweren jedoch deren Verarbeitung in nachfolgenden Schmelzprozessen bzw. sind so gut wie nicht zu verarbeiten.

Die Überführung von Metallpulvern in kompakte Schmelzen ist an sich bekannt. Sie kann durch ausreichende Zufuhr von thermischer Energie über Wärmeleitung erreicht werden. Da das Erwärmen von Pulvern mit sinkender Wärmeleitfähigkeit erschwert wird, kann man nicht gleichförmig tief in das Material eindringen. Hierbei entsteht ein größerer Temperaturgradient. Die erreichbare Aufheizgeschwindigkeit wird daher über die Wärmeleitung begrenzt.

Für die Erwärmung großer Volumina und poröser Körper ist ferner das Sintern mit Mikrowellen bekannt. Dieses wird z.B. in der DE 195 15 342 mit einer speziellen Verfahrensausführung beschrieben. Hinsichtlich der Anwendung auf Si-Feinstpulver mit katalytisch relevanten Begleitstoffen, deren Verteilung über den Erfolg von Wirbelbett-Synthesen mit diesen Pulvergemischen entscheidend sein kann, findet man dort indes keine Hinweise. Ebenso ist die Konditionierung von amorphen hochreinen Mikropulvern zu Sinterkörpern für nachfolgende Schmelz- und Refiningprozesse unter Aufrechterhaltung des Reinheitsniveaus in der erfindungsgemäßen Weise nicht beschrieben.

Bekannte Verfahren wie das Tiegelziehen in Quarz oder Graphit-Tiegeln (Czochralski Kristallziehverfahren) oder diverse Zonenschmelz-Verfahren setzen die elektromagnetische Induktionsheizung zum Erhitzen von stückigen Granulaten höherer Dichte ein, um ein kompaktes Schmelzbad für die Zonenreinigung bereitszustellen. Zu einer solchen metallurgischen Reinigung (Segregation) sind im Prinzip alle Verfahren geeignet, die das Si-Metall aufheizen und nach definierten Temperatur-Zeit- Verhältnissen gezielt abkühlen (EP 699 625, ERDA/JPL/954559 70/2 Hunt, Dosaj, McCormick, Solar Silicon Via Improved a. Expanded Metallurgical Silicon Technology 1977; Amerlaan, C.A.J. Hrsg., Proc. Symos. Sci. a. Techn. of Defects in Silicon of the E-Mrs Meeting Straßbourg, May/June 1989; W. Zulehner, Elesevier Sequoia 1989 Mater. Sci. A. Eng. Vol. B4 No. 1-4; Heimann, Huber, Seidensticker, Zulehner, in Silicon Chemical Etching, Ed. J. Grabmeier, Springer Berlin 1982; Silbernagel, Chem. Ing. Tech. 50 (1978) 8, S. 611-617; Dietze, Mühlbauer, Chemiker Zeitung 97 (1973) 3 S. 151-155; Dietl, Helmreich, Sirtl, "Solar Silicon", in Crystals: Growth Properties a. Appl. 5 Springer Verlag Berlin 1981, S. 43ff).

Eine Variante zur Sinterung von Si-Pulvern ist von C.J. Santana, K.S. Jones in J. Mater. Sci. 31 (1996) S. 4985-90 beschrieben worden, wobei das Si-Pulver durch Heißpressen dicht, d.h. zu hoher Dichte zu einem Wafer gesintert/verdichtet wurde. Die JP-A-05229812 offenbart ein Verfahren zur Herstellung eines gesinterten Siliziumproduktes durch Druckformen von Siliziumpulver hoher Reinheit bei einer Temperatur im Bereich von 1200° C bis zum Schmelzpunkt des Siliziums unter Vakuum und nachfolgendem Sintern des geformten Produktes sowie die Herstellung von Wafem und Sputtertargets aus dem gesinterten Produkt.

Die vorliegende Erfindung hat sich angesichts dieses Standes der Technik die Aufgabe gestellt, die Verwendbarkeit feiner Si-Pulver mit Durchmessern von 1 bis 1000 µm, welche durch ihre geringe Schüttdichte einen geringen Wärmedurchgang aufweisen, für verschiedene Weiterverarbeitungsprozesse zu verbessern. Dabei soll mit möglichst wenig Energie wahlweise die Korngröße, chemische Zusammensetzung, Reaktivität und/oder Phasenverteilung der Begleitstoffe in der Matrix des Si beeinflusst werden können. Ferner soll das behandelte Silicium gegebenenfalls leicht in ein wirbelbettfähiges Pulver zu überführen sein.

Diese Aufgabe wird dadurch gelöst, indem man das Siliciumpulver durch Einwirkung von Mikrowellenstrahlung im Wellenlängenbereich 0,5 kHz bis 300 GHz auf eine Temperatur von mindestens 250°C, vorzugsweise 1200 bis 1500°C erhitzt und damit agglomeriert, wobei verdichtete Siliciumgranulate variabler Porosität erhalten werden. Überraschenderweise hat sich gezeigt, dass ein derartig behandeltes Siliciumpulver in vielerlei Hinsicht verbesserte Eigenschaften aufweist. Je nach den Bedingungen erhält man einen Sinterkörper höherer Dichte und/oder Pulver veränderter Reaktivität. Wahlweise können Korngröße, chemische Zusammensetzung, Reaktivität oder Phasenverteilung der Begleitstoffe in der Matrix des Si verändert werden. Ferner haben die Sinterkörper/Pulver nach Erwärmen eine Porosität, die es erlaubt,
a) den Si-Körper mit minimalem Zusatzaufwand (Brechen statt Mahlen) in ein wirbelbettfähiges Pulver zu überführen, oder
b) die Begleitstoffe durch Sichten nach Brechen/Mahlen oder chemische Reinigungsschritte abzureichern, oder
c) den Sinterkörper, der nur noch geringe Gaseinschlüsse enthält, in Si-Schmelzen für weitere Refiningschritte vorteilhaft zur Verfügung zu stellen.

Die Erfindung erlaubt es, ein Si-Metall-Feinstpulver mit minimalem Energieaufwand unterhalb der Schmelztemperatur des Siliciums zu agglomerieren bzw. spätestens bei der Schmelztemperatur Phasenseparationen bzw. Refiningvorgänge gezielt ablaufen zu lassen oder vorzubereiten. Für Pulver, die sich bereits im gewünschten Komgrößenbereich befinden, sind die Konditionierung bei erhöhter Temperatur das ausschließliche Ziel des Verfahrens.

Dabei soll es zu möglichst wenig Haftung mit dem Wandmaterial kommen. Diese Form der Erwärmung erlaubt es, den Sintervorgang nur bis zu dem Maße voranschreiten zu lassen, bei dem sich der überwiegende Teil des Feinstpulvers in seiner Korngröße um den Faktor 2 bis 100 vervielfacht hat.

Als Ausgangsstoff für die Agglomeration dient vorzugsweise Siliciumfeinstaub mit einer Partikelgröße von weniger als 600 µm, besonders bevorzugt weniger als 100 µm. Derartige Pulver sind technisch in großem Maße verfügbar als Kornfraktionen aus der Mahlung von Si-Pulvern für die Müller-Rochow-Synthese bzw. die Hydrochlorierung sowie als Stäube aus der Feinstaubabscheidung (z.B. im Zyklon) bei diesen Wirbelbettprozessen, wie Müller-Rochow, Hydrochlorierung, Silan-Zersetzung zu Reinst-Si die wegen ihrer aerodynamischen oder chemischen Eigenchaften selbst nicht mehr vorteilhaft in einem Wirbelbettprozess, Schachtofen oder nachfolgenden Prozessen eingesetzt werden können.

Das erhaltene Siliciumgranulat hat dagegen vorzugsweise eine mittlere Korngröße von mindestens 30 µm, die es für die genannten Wirbelbettprozesse wiederverwendbar macht.
Die erfindungsgemäße Wärmebehandlung mit Mikrowelten kann in einem bewegten Rührbett, vorzugsweise einem Wirbelbett, durchgeführt werden. Eventuell noch auftretende Inhomogenitäten der Wärmeverteilung werden in einem solchen Rührbett abgebaut. Die Einstrahlung der Mikrowellen erfolgt mit geeigneten Antennen durch die Außenwand oder in den Innenraum der Agglomerationsreaktoren

Vorzugsweise findet die Wärmebehandlung in einem Reaktor aus mikrowellen-transparentem und/oder mikrowellenreflektierendem Material, insbesondere Nichtoxidkeramik, Graphit, Oxidkeramik oder Quarz, statt. Derartige Tiegelmaterialien erlauben eine effiziente Erwärmung des Materials und gewährleisten geringe Wandhaftung gegenüber flüssigem Si.

Das Siliciumpulver kann vor der Mikrowellenbehandlung mit metallhaltigen inbesondere wie z.B. Cu, Ag, Al, Ca, Sn, Zn und/oder bor-, phosphor-, arsen- oder antimonhaltigen Dotierstoffen versetzt werden (Ag, Al, As, Cd, Cs, Cu, Ce, Co, Cr, Fe, In, Ir, Mo, Mn, Cr, Ni, P, Pt, Pd, Rh, Ru, Se, Sb, Sn, V, Zn). Derartige Stoffe wirken dann bei der späteren Weiterverarbeitung als Katalysatoren, wenn z.B. eine Umsetzung mit Halogeniden RX erfolgt (R = Me, Et, Phe; X = Cl, Br).

Alternativ oder ergänzend hierzu kann aber auch erst das durch die Mikrowellenbehandlung erhaltene Granulat mit metall- wie z.B. Cu, Ag, Al, Ca, Sn, Zn und/oder bor-, phosphor-, arsen- oder antimonhaltigen Dotierstoffen nach Maßgabe z.B. der für die Rochow-Synthese oder Hydrochlorierung üblichen Anforderungen versetzt werden.

Weiterhin kann das durch die Mikrowellenbehandlung erhaltene Granulat gemahlen und gegebenenfalls gesichtet werden. Aufgrund seiner Porosität ist das Mahlen des Granulats erheblich erleichtert. Der Brech- oder Mahlvorgang erzeugt zudem bevorzugt Oberflächen mit veränderter chemischer Zusammensetzung, die gegenüber Reaktanden des Typs RX veränderte Reaktivität und Produktzusammensetzung im Vergleich zum nicht behandelten Si erzeugen.

Die nach Agglomeration gesichteten Pulver sind aufgrund der gestiegenen Korngröße in einem Wirbelbett besser zu handhaben als die Ausgangspulver. Sie erlauben fallweise die Abreicherung von Verunreinigungen durch Sichten und/oder chemische Reinigungschritte.

Das nach dem erfindungsgemäßen Verfahren erhältliche Siliciumgranulat hat vorzugsweise eine Porosität von 0 bis 80 %. Eine hohe Porosität prädestiniert es insbesondere für ein erleichtertes Mahlen (bzw. Brechen).

Die mittlere Kristallgröße der Einzelkristalte des Siliciumgranulats ist im allgemeinen kleiner als 50 µm. An den Korngrenzen der Einzelkristalle liegen vorzugsweise metallhaltige und/oder nichtmetallhaltige Fremdphasen oder Präzipitate vor.

Das nach dem erfindungsgemäßen Verfahren erhältliche Siliciumgranulat kann vorzugsweise dazu verwendet werden, Siliciumeinkristalle herzustellen. Dies kann insbesondere nach dem Czochralski- oder float-zone-Verfahren erfolgen.

Ebenso können aber auch multikristalline Siliciumblöcke hergestellt werden, was vorzugsweise durch gerichtete Kristallisation von Schmelzen der Siliciumgranulate geschieht. Die Verwendung eines agglomerierten Si-Feinstpulvers mit geringen Ver-unreinigungen in einem Refining Prozess erfolgt so, dass man das Feinstpulver mittels EM-Wellen auf Temperaturen bis zum Schmelzpunkt erwärmt und den erhaltenen Sinterkörper danach einem weiteren Schmelzofen zuführt, in dem multikristallines Si für Halbleiter-Anwendungen mittels eines Segregationsprozesses hergestellt wird.

Schließlich kann das nach dem erfindungsgemäßen Verfahren erhältlichen Siliciumgranulat auch zur Umsetzung mit Chlorwasserstoff oder Halogenkohlenwasserstoffen verwendet werden. Dabei macht sich insbesondere seine für Wirbelbettprozesse angepasste Korngröße positiv bemerkbar. Vorzugsweise sind dem Siliciumgranulat für Prozesse wie die Müller-Rochow-Synthese oder die Hydrochlorierung geeignete Katalysatoren zugesetzt worden, um die Reaktion mit Halogeniden RX zu fördern (R = Me, Et, Phe; X = Cl, Br).

Den nachträglich gebrochenen nach dem erfindungsgemäßen Verfahren erhältlichen Sinterpulvern können weiterhin Katalysatoren zugemischt werden, die zu der Gruppe derjenigen Elemente gehören, die man in der Wirbelbett-Synthese von Methylchlor-, Phenylchlor-, Hydridochlor- oder Chlorsilanen (bzw. deren Hydrierung in Gegenwart von Si-Pulvern) im Wirbelbett nach dem Stande der Technik benutzt, d.h. insbesondere Ag, Al, As, Cd, Cs, Cu, Ce, Co, Cr, Fe, In, Ir,Mn, Mo, Ni, P, Pt,Pd,Rh,Ru,Se, Sb, Sn, V, Zn.

Dem nach dem erfindungsgemäßen Verfahren erhältlichen Siliciumgranulat sollten die genannten Katalysatoren vor dem Erwärmen in einer Größenordnung zugeführt werden, die eine ausreichende Aktivierung für die genannten Synthesen ermöglicht, wobei die Erwärmung dann vorzugsweise auf Temperaturen unterhalb des Schmelzpunktes der Elemente beschränkt bleiben kann.

Insbesondere kann das nach dem erfindungsgemäßen Verfahren erhältliche Siliciumgranulat so hergestellt werden, dass Pulver aus der Mahlung bzw. Staubabscheidung von Wirbelbett-Reaktoren, in denen die Umsetzung von RX + Si stattfindet (R = Me, Et, Phe; X = Cl, Br), ggf. gereinigt, agglomeriert, gebrochen, gemahlen und gesichtet werden. Anschließend kann noch die Abmischung mit 0 bis 95 % metallurgisch frisch hergestelltem Silicium gleicher, für Wirbelbetten geeigneten Korngröße, erfolgen.

Die erfindungsgemäße Herstellung des Siliciumgranulats, das insbesondere in Reaktionen mit RX verwendet werden kann, kann so erfolgen, dass nach der Erwärmung durch elektromagnetische Wellen die Si-fremden Bestandteile z.T. oder ganz in separaten Phasen vorliegen und durch Brechen/Mahlen/Verdampfen und Sichten und/oder Waschen, Laugen bzw. Extrahieren abgereichert werden können.

Im folgenden wird die Erfindung anhand von Ausführungsbeispielen näher erläutert.

### 1. Grundlagen

Die technisch in großem Maße verfügbaren Si-Feinstpulver sind Kornfraktionen aus der Mahlung von Si-Pulvern für die Müller-Rochow-Synthese bzw. die Hydrochlorierung sowie Stäube aus der Feinstaubabscheidung (z.B. Zyklon) bei diesen Wirbelbettprozessen (Müller-Rochow-Synthese, Hydrochlorierung, Silan-Zersetzung), die wegen ihrer aerodynamischen oder chemischen Eigenschaften selbst nicht mehr vorteilhaft in einem Wirbelbettprozess oder nachfolgenden Prozessen eingesetzt werden können.

Die generelle chemische Eignung für die MCS-Synthese lässt sich z.B. mit einem Labor-Rührbett prüfen, welches bezgl. der Korngrößenverteilung relativ unempfindlich ist. Hinsichtlich der Eignung im Wirbelbett ist bekannt, dass hier neben der chemischen Zusammensetzung überwiegend eine definierte mittlere Korngröße oberhalb 30 µm die kennzeichnende physikalische Größe darstellt. Beispielhafte Ausführungen und die gewünschte Korngröße findet man bei Rösch, Kalchauer S.7 in "Silicon for the Chemical Industry III", Sandefjord Norwegen 1996 - Ed: Oye, Rong und bei Ceccaroli, Nygaard, Tuset, The Norwegian Univ. Sci. a. Tech., Trondheim 1996 S. 269 ff. , E. Klar ebd. S. 169 oder auch in DE 195 32 315, S.3 Z. 55-64.

### 2. Agglomeration

### 2.1. Verfahren im Induktionsofen

Für die Herstellung von Sinterkörpern in einem Induktionsofen benutzte man einen Vakuum-Induktions-Schmelz- und Gießofen Typ IS 1 III der Fa. LEYBOLD HERAEUS. Die Merkmale dieses Ofens sind u.a. eine Arbeitsfrequenz von 10 kHz sowie eine Leistung von 30 kW, ein erreichbares Vakuum von 1,3·10⁻⁵ mbar.

Die Pulverproben wurden mechanisch mit einem Druck von ca. 0,5 bar vorverdichtet. Danach führte man davon dann ca. 100-200 g in einen Quarz-, SiC- oder Korundtiegel, idealerweise aus Gründen guter Entformung und hoher Heizgeschwindigkeit in einen Graphittiegel, der oberflächlich mit Si₃N₄ (BAYER CFI 06051, Dicke ca. 0,3-0,5 mm) beschichtet war oder ganz aus Si₃N₄ bestand. Nach zweimaligem Evakuieren bei 0,5 - 8 mbar (mit Öldiffusionspumpe bis 1,3·10⁻⁵ mbar) wurde der Ofen anschließend mit Ar bzw. He bei Normaldruck aufgefüllt.

Das Aufheizen auf 700-1600°C ließ sich in 15-40 min (je nach Tiegelmaterial und vorgeschaltetem konventionellem Vorheizen auf ca. 200°C) durchführen.

Es wurde eine umgekehrt zur Probenmengen proportionale spezifische Heizenergie von ca. 28 kJ/g (für 100 g Probe) = 7,8 kWh/kg beobachtet. Die Proben kühlten unter He-Schutzgas in ca. 2 h auf 300-150°C ab.

### 2.2. Verfahren im Mikrowellenofen

Anstelle des Induktionsofens kann man auch ein Mikrowellenofen einsetzen. Die Merkmale dieses Ofens waren Energieerzeugung durch ein Magnetron mit 2,45 GHz, 3 kW ab 250 W regelbar mit variablen Platten zur Begrenzung der bestrahlten "cavity". Eingestrahlte Energie: 500-700 W bis max. 1700 W regelbar, zwischen 500-1200°C erfolgt schnelles Aufheizen.

Als Tiegelmaterial für Si wurden Al₂O₃- sowie Si₃N₄-Tiegel, die oberflächlich mit Si₃N₄ (BAYER CFI 06051, Dicke ca. 0,3-0,5 mm) beschichtet waren, eingesetzt. Die Probengröße lag bei Mengen von 100-200 g. Die Proben wurden mechanisch, wie oben, vorverdichtet.

Nach zweimaligem Evakuieren der Ofenkammer auf 0,1 mbar füllte man diese mit He oder Ar auf.

In Abhängigkeit von Probenmenge, Tiegelisolation und Vorheizung auf 200°C konnten nach 15-60 min Temperaturen von 1200-1450°C (Oberflächentemperatur mittels Pyrometer) und damit auch der Schmelzpunkt von Si (1423°C) erreicht werden.

Man beobachtet auch hier eine umgekehrt zur Probenmenge proportionale spezifische Heizenergie von ca. 19 kJ/g (für 100 g Probe) = 5,3 kWh/kg.

Die Proben kühlten unter He-Schutzgas in ca. 1-1,5 h auf 300°C ab.

### 3. Bewertung

### 3.1. Bewertung des gesinterten Si-Pulvers in Reaktion mit Methylchlorid bzw. Chlorwasserstoff

In ein Quarzrohr mit einem Glasfrittenboden sowie einem mit Rührführung eingesetzten Rührer füllte man 40 g des mit der angegebenen Korngröße ausgewählten gesichteten oder gesiebten Pulvers. In der Regel wurde eine Korngröße von 71-160 µm bevorzugt, nachdem man das Granulat gebrochen, gemahlen und gesichtet bzw. gesiebt hatte.

### 3.1.1

Im Falle der Reaktion Si mit Methylchlorid setzte man in der Regel dem Si -Pulver 3,2 g Cu/Cu₂O/CuO Katalysator (86% Cu) und 0,04g ZnO zu. Der Methylchlorid-Strom lag bei 1,8 1/h und 2 bar abs. Anschließend füllte man den Gasraum mit Stickstoff auf. Über einen elektrisch beheizten Röhrenofen der Firma HERAEUS brachte man den Inhalt des Glasrohres für 1 h kurzzeitig auf 370°C und hielt danach mit einem Schrägrohrmanometer einen Druck 2 bar abs. bei 300°C bzw. 330°C über 8 Stunden während der Reaktion aufrecht

Die entstehenden bei 300°C leichtverdampfenden Produkte leitete man über einen absteigenden Glaskühler mit einer Kühlmediumtemperatur von 15°C ab und kondensierte sie. Die unter diesen Bedingungen nicht kondensierbaren Abgase, bestehend aus MeCl, HCI u.a., leitete man in den Abluftstrom. Die bei 15-20°C kondensierbaren Flüssigkeiten der verschiedenen Methylchlor bzw. Chlorsilane sammelte man in einer unterhalb des Kühlers angeschlossenen Vorlage und führte sie einer Messung im Gaschromatographen zu.
(Details: vgl. DE 195 32 315).

### 3.2.1

Im Falle der Reaktion Si+HCl statt Methylchlorid entfiel die nachträgliche Zugabe katalytischer Zusätze. Als Druck wurde ebenfalls 1 barü eingestellt, jedoch varierte man hier die HCl-Menge (4,2/9,6 1/h über digitale Durchflussmesser) und die Temperatur von 220-350°C. Die Voraktivierung bei 370°C entfiel.

### 3.2. Eignung in der MCS-Synthese: Beispiele

### 3.2.1. Vergleichsbeispiel: Reaktion mit Standard metal-grade Si im Laborrührbett

Metal-grade Silicium-Granulat des Herstellers LILLEBY wurden in einer Achatmühle mit elektromechanischem Pistill zermahlen. Durch Sieb mit ASTM-Norm-Sieben entnahm man für das Laborrührbett eine Fraktion mit 71-160 µm Korndurchmesser.

Der Gehalt an Spurenbestandteilen wurde mittel ICP-AS ermittelt.

Nach Umsetzung mit Methylchlorid, wie unter 3.1.1 genannt, erhält man die in Tab.1 in der ersten Spalte "Vergleich" angegebenen Mengen an Methylchlorsilanen.

### 3.2.2. Beispiel 1a (Vergleich: Einsatz von unbehandelten Mahlfines)

Die während der Mahlung in einer Hammermühle mit keramischen Kugeln unter N₂-Schutzgas unter technischen Bedingungen erhaltenen Mahlfines aus dem im Vergleichsbeispiel benutzten Silicium-Granulat blies man aus der Mühle in einen Filter. Für diese Mahlfines bestimmte man einen mittleren Korndurchmesser von 35 µm und eine Verteilung von 5-50 µm. Die Korngrößenverteilung wurde hier mit Hilfe eines MALVERN Master Sizers 2000 (Streulicht-Messung) in den anderen Fällen oberhalb 36 µm mittels ASTM-Norm-Sieben ermittelt.

In dem oben beschriebenen Verfahren 3.1.1. der Umsetzung mit Methylchlorid nach Müller-Rochow in einem Labor-Rührbettreaktor erhielt man das Methylchlorsilangemisch nach Tab.1 (Spalte 2, Überschrift "1a").

Hierbei sind eine ausreichend hohe Produktionsrate und hoher Gehalt an Me₂SiCl₂ die wichtigsten Optimierungsziele, jedoch stellt die hier nicht bewertbare Eigenschaft, einen größeren Korndurchmesser als 40 µm und damit eine Eignung für das Wirbelbett erzeugt zu haben ein gleich- oder sogar höherrangiges Ziel dar.
Man beobachtet für **1a** eine im unteren Erwartungsbereich liegende Produktionrate sowie Konzentration an Me₂SiCl₂.

### 3.2.3. Beispiel 1b (Einsatz von erfindungsgemäß behandelten Mahlfines)

Von den im Mahlprozess vom Vergleichsbeispiel 3.2.2. aufgefangenen Mahlfines führte man 200 g einer Agglomeration mit Mikrowelle (Mikrowellenofen nach Typ II) 2.2. unter Ar-Schutzgas zu. Aufheizzeit: 30 min. Temperatur, Sinterdichte und Teilchengröße nach Mahlen und Sichten wie Tab.1 angegeben (Spalte 3, Überschrift "1b"). Die eingestrahlte Energie lag zwischen 500-1500 Watt.

Nach dem Ausschalten der Energie und Abkühlen auf ca. 200°C wurde das Material entnommen. Anschließend ließ man auf Raumtemperatur (25°C) unter Luftzutritt abkühlen und führte das Agglomerat der Mahlung und Siebung zu. In einem Brechprozess unter Zuhilfenahme eines Hammers und einer Achatmühle mit elektromechanisch bewegtem Pistill konnte ein Pulver mit den in Tab.1 genannten Eigenschaften gewonnen werden.

Für den Laborreaktor entnahm man für die Vergleichsuntersuchungen per Siebsichtung eine Fraktion von 71-160 µm mit einen D50%-Wert von 120 µm.

Man beobachtet, dass der hohe Fe-Gehalt der Mahlfines aus Beispiel 1a im Mahlund Sichtungsprozess auf ein Niveau in der Nähe des Standard Materials aus dem Vergleichsversuch vermindert wurde.
Die Produktionsrate liegt im unteren Erwartungsbereich, die Me₂SiCl₂-Konzentration hat sich gegenüber dem Vergleich/Standard verbessert.

### 3.2.4. Beispiel 2 (unbehandelter Si-Staub aus dem Wirbelbett der Rochow-Synthese)

Nicht gesinterter Feinstaub aus dem Wirbelbett der Rochow-Synthese (siehe auch Beispiele 2b-2d) wurde wie oben beschrieben bewertet (Tab.1, Spalte 4, Überschrift "**2**").

Dieser Si-Staub hatte einen mittleren Komdurchmesser von 20 µm und bestand zu ca. 76 % aus Si . Darüber hinaus enthielt er vor dem Sinterprozess 11,4 % Cu, 3 % Fe, 2,9 % C, 0,3 % Zn sowie 2 %Cl u.a. Metalle.

Die Eigenschaften im Laborrührbett bezgl. der Produktionsrate und Me₂SiCl₂-Konzentration weisen große Ähnlichkeit mit dem Si aus dem Vergleichsversuch auf.

### 3.2.5. Beispiele 2a bis 2d (Erfindungsgemäß behandelter Si-Wirbelbettstaub)

Der Staub 2 aus dem Wirbelbett wurde einer schrittweisen Temperaturerhöhung durch Einwirkung von Mikrowelle unterzogen und agglomerierte ihn in unterschiedlich starkem Umfang.

Man führte dem Mikrowellenofen den unter 2 beschriebenen Si-Staub zu. Nach einem Aufheizschritt über 40 min auf ca. 800-820°C hielt man ca. 30 min dieses Temperaturniveau und beobachtete als Plasmawolke verdampfende Cu-Salze. Weiteres Aufheizen führte nach 20 min auf eine vorgewählte Stufe von 4 verschiedenen Endtemperaturen, maximal 1500°C (jeweils mittels Pyrometer gemessene Oberflächentemperaturen), die ca. 20 min gehalten werden. Danach ließ man unter Abschalten der Strahlungsquelle erkalten.

Das nach Brechen, Mahlen und Sichten auf 10-160 µm abgetrennte Pulver (Cu-Gehalt 11,4 %) wurde im Vergleich zu nicht gesintertem Feinstaub nach Beispiel **2** in 3.2.4 bewertet. (Tab. 1, Spalten 4-7, Überschriften "2a" bis "2d)

Es zeigt sich, dass oberhalb 800-900°C die Produktionsrate für Methylchlorsilane sowie die Konzentation an Me₂SiCl₂ abfällt und danach zu einem niedrigeren Zwischenmaximum bezüglich der Hauptkomponente kommt. Das agglomerierte Si ist bei Anwendung dieser Verfahrensfolge für die Umsetzung mit Methylchlorid weniger geeignet.

### 3.2.6. Beispiele 3a und b (Mischung von Wirbelbettstaub mit Mahlfines aus metal grade Silicium)

Man vermischte 85 Teile metal-grade Silicium Mahlfines aus dem Beispiel 1a. mit 15 Teilen des Feinststaubes aus dem Zyklon eines Wirbelbettes der Methylchlorsilan-Synthese.

Beispiel 3a beschreibt das Ergebnis für das nicht gesinterte Produkt (Tab.1, Spalte 8, Überschrift "3a").

In Beispiel 3b wurde das Pulver erfindungsgemäß angesintert. Man beobachtet einen Abfall der Produktionsrate und einen höheren Gehalt an Me₂SiCl₂ (Tab.1, Spalte 9, Überschrift "3b").

### 3.2.7. Beispiele 4a und 4b (Aktivierung von metall-grade Si-Pulver + Katalysator-Promotorgemisch)

Hier wurde einem Standard metal-grade Si-Pulver aus 3.2.1.-**Vergleich** der Korngröße 71-170 µm zusammen mit den in der Tabelle angegebenen Mengen Katalysator (Cu/CuO, Zn, Sn) gemischt und in Beispiel 4b einer Erwärmung per Mikrowelle unter Ar-Schutz ausgesetzt. Die angegebene Temperatur unterhalb des Schmelzpunktes hielt man ca. 30 min lang, um danach unter Schutzgas auf 150°C abzukühlen.

Man erkennt in Tab. 1 (Spalten 10,11, Überschriften "4a", "4b") für eine definierte Zusammensetzung die Zunahme der Produktionsrate des entstandenen Methlylchlorsilangemisches und geringfügig erhöhte Konzentration an Me₂SiCl₂.

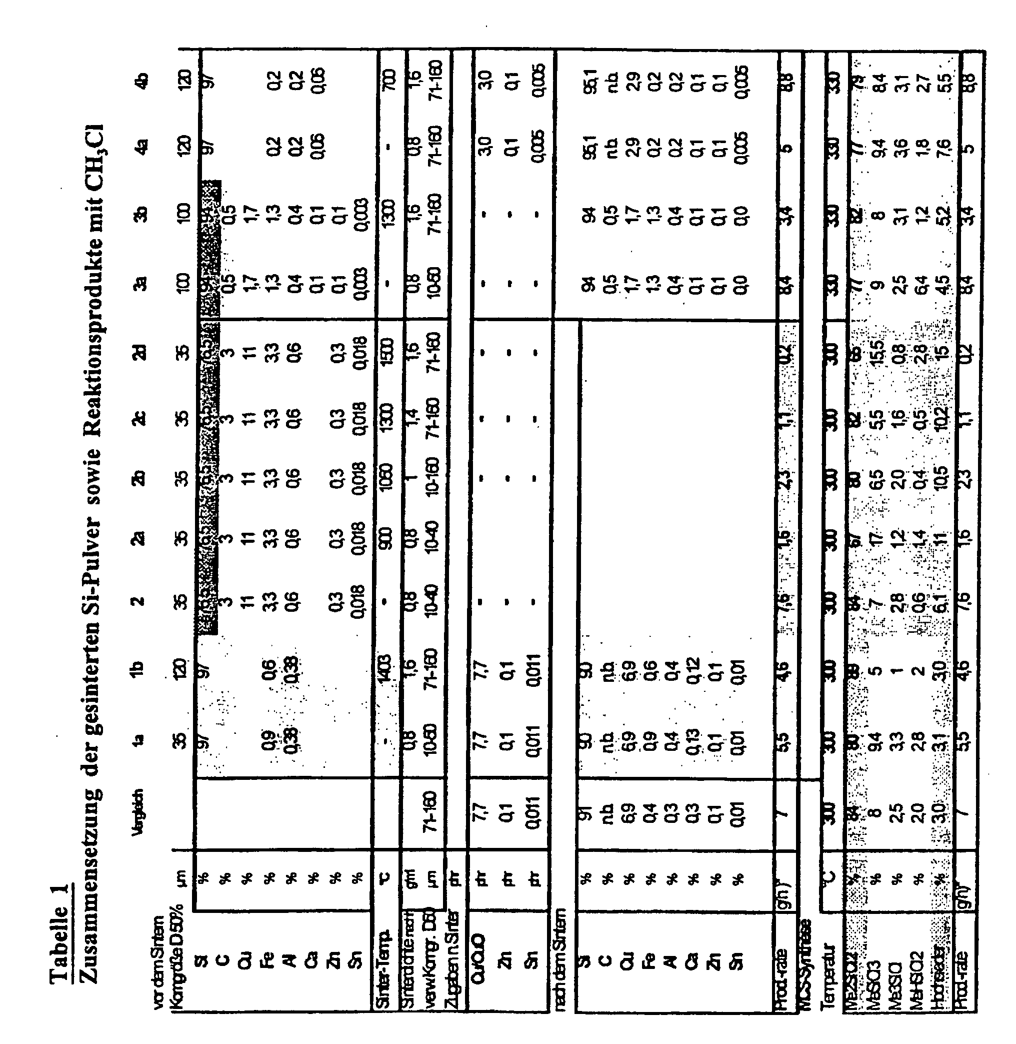

### 3.2.8. Beispiele 5a und 5b (Si-Mahlfines aus Beispiel 1a in der Hydrochlorierung)

Tab. 2 zeigt im Falle einer Hydrochlorierung im Laborrührbett (Verfahren wie bei Bewertung nach 3.1.2 mit dem Unterschied, dass statt CH₃Cl jetzt HCI verwendet wurde) sowohl für die Mahlfines im Originalzustand wie auch für die erfindungsgemäß agglomerierten Mahlfines ungefähr gleiche Reaktivität und Produktzusammensetzung.

### 3.2.9. Beispiele 6a und 6b (Wirbelbettstaub aus Beispiel 2 in der Hydrochlorierung

Verwendet man bei der Hydrochlorierung den Feinstaub-Austrag aus dem Wirbelbett (Zyklon) der Methylchlorsilan-Synthese, so bestehen zwischen dem unveränderten Wirbelbettfeinststaub und dem erfindungsgemäß agglomerierten und gemahlenen Staub die in Tab.2 ausgewiesenen Unterschiede.

Der agglomerierte, gemahlene und gesiebte Staub erzeugt mehr SiCl₄ bei meist geringerer Produktionsrate. Erhöht man jedoch das HCI-Angebot von 4,2 l/h auf 9,6 l/h steigt die Produktionsrate auf ein vergleichbares Niveau wie das des nicht agglomerierten Si aus 2 bzw. 6a.

### 3.3.10. Beispiel 7 (Si-Mikrostaub aus Zersetzung von SiH₄ zu Reinst-Si)

Aus dem Herstellungsprozess von Reinst-Si durch Zersetzung von SiH₄ bei 700-800°C nach der US 47 84 840 bzw. US 48 83 687 wurde ein Pulver der mittleren Korngröße 2 µm mit einer Verteilung von 0,05-5 µm abgeschieden.

200 g dieses Pulvers führte man, wie oben beschrieben, dem Mikrowellenofen zu. Innerhalb von 60 min heizte man das Pulver unter He auf 1450°C auf und erhielt einen Schmelzkuchen der Dichte 1,9 g/cm³, den man auf 200°C unter Schutzgas abkühlen ließ.

Bei Einsatz von einem Si₃N₄-Tiegel ließ sich ein kompakter Ingot/Regulus entnehmen. Diesen führte man einem Schmelzofen (ULLMANN ENCYCLOPEDIA of Ind Chem., 1993 A 23 S.739, BRIDGEMAN-Schmelzofen (J.C. Brice: Crystal Growth Processes, Blackie Glasgow u. London (1986) S. 104) zu.

Hierbei vollzog man nach dem Aufschmelzen auf 1450°C eine programmierte Erstarrung in definierten Schritten zu multikristallinem Si mit Kristallitgrößen von üblicherweise 5-50 mm. Im Ergebnis erhielt man einen multikristallinen Si-Block, der nach dem Abschneiden der Außenbereiche einen multikristallinen Kern der gewünschten Zusammensetzung und Struktur für solar-grade Si zur Verfügung stellt. Es hatte nach erfindungsgemäßer Agglomeration und Überführung in multikristallines Si mittels eines BRIGDEMAN Ofens eine Leitfähigkeit von ca. 2000 Ohm·cm Nach Zersägen des Kernes in 350 µm dicke Si-Scheiben können diese als Wafer in einem Solar-Modul eingesetzt werden.

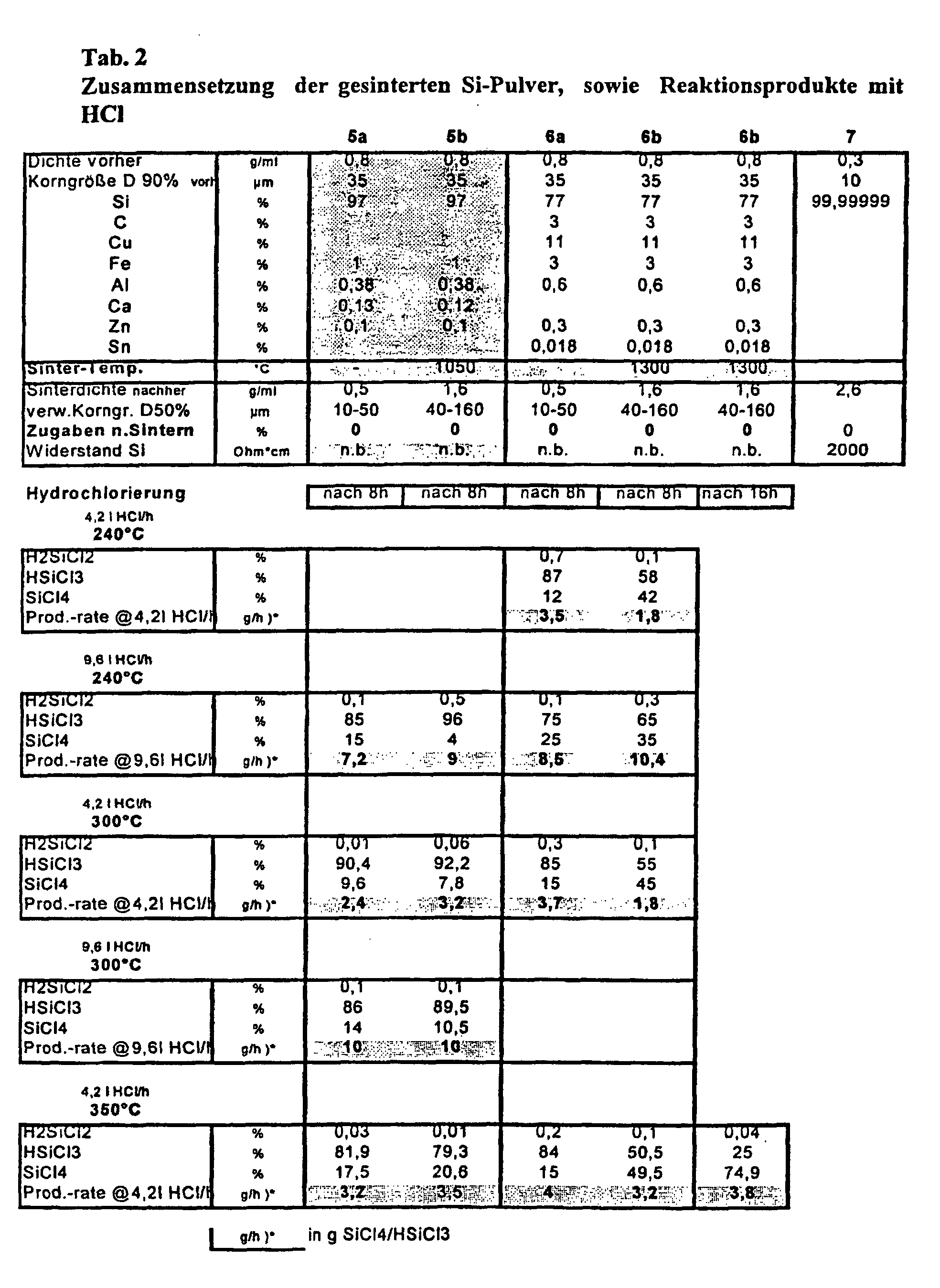

## Patentansprüche

1. Verfahren zur Agglomeration von Siliciumpulvern, **dadurch gekennzeichnet, dass** das Siliciumpulver durch Einwirkung von Mikrowellenstrahlung im Wellenlängenbereich 0,5 kHz bis 300 GHz auf eine Temperatur von mindestens 300°C erhitzt wird und dabei verdichtete Siliciumgranulate variabler Porosität erhalten werden.

2. Verfahren nach Anspruch 1, **dadurch gekennzeichnet, dass** als Ausgangsstoff Siliciumfeinstaub mit einer Partikelgröße von weniger als 600 µm dient.

3. Verfahren nach einem der Ansprüche 1 oder 2, **dadurch gekennzeichnet, dass** das Siliciumgranulat eine Korngröße von mindestens 30 µm aufweist.

4. Verfahren nach einem der Ansprüche 1 bis 3, **dadurch gekennzeichnet, dass** die Wärmebehandlung in einem bewegten Rührbett, Taumelmischer, Drehrohr oder einem Wirbelbett mit innen oder außenliegenden Vorrichtungen zur Einleitung elektromagnetischer Strahlung durchgeführt wird.

5. Verfahren nach einem der Ansprüche 1 bis 4, **dadurch gekennzeichnet, dass** die Wärmebehandlung in einem Reaktor aus mikrowellen-transparentem und/oder mikrowellenreflektierendem Material stattfindet.

6. Verfahren nach einem der Ansprüche 1 bis 5, **dadurch gekennzeichnet, dass** das Siliciumpulver vor der Mikrowellenbehandlung mit metallhaltigen Dotierstoffen versetzt wurde.

7. Verfahren nach einem der Ansprüche 1 bis 6, **dadurch gekennzeichnet, dass** das durch die Mikrowellenbehandlung erhaltene Siliciumgranulat mit metallhaltigen Dotierstoffen versetzt wurde.

8. Verfahren nach einem der Ansprüche 1 bis 7, **dadurch gekennzeichnet, dass** das durch die Mikrowellenbehandlung erhaltene Siliciumgranulat gemahlen und gegebenenfalls gesichtet und der Feinanteil in die Agglomerationszone zurückgeführt wird.

9. Verwendung des Siliciumgranulates, erhältlich nach einem der Ansprüche 1 bis 8 zur Herstellung von Siliciumeinkristallen.

10. Verwendung des Siliciumgranulates, erhältlich nach einem der Ansprüche 1 bis 8 zur Herstellung von multikristallinen Siliciumblöcken.

11. Verwendung des Siliciumgranulates, erhältlich nach einem der Ansprüche 1 bis 8, ggf. nach Mahlung und Sichtung, zur Umsetzung mit Chlorwasserstoff oder Halogenkohlenwasserstoffen des Typs RX im Temperaturbereich 150-700° C in Wirbelbetten oder Schachtöfen.

## Claims

1. Process for the agglomeration of silicon powders, **characterized in that** the silicon powder is heated to a temperature of at least 300°C by exposure to microwave radiation in the wavelength range from 0.5 kHz to 300 GHz, and compacted silicon granules of variable porosity are obtained.

2. Process according to Claim 1, **characterized in that** the starting material used is fine silicon dust having a particle size of less than 600 µm.

3. Process according to Claim 1 or 2, **characterized in that** the silicon granules have a particle size of at least 30 µm.

4. Process according to any of Claims 1 to 3, **characterized in that** the heta treatment is carried out in a stirred moving bed, a tumble mixer, a rotary tube or a fluidized bed provided with internal or external means for introducing electromagnetic radiation.

5. Process according to any of Claims 1 to 4, **characterized in that** the heat treatment is carried out in a reactor made of microwave-transparent and/or microwave-reflecting material.

6. Process according to any of Claims 1 to 5, **characterized in that** the silicon powder has been admixed with dopants containing metals prior to the microwave treatment.

7. Process according to any of Claims 1 to 6, **characterized in that** the silicon granules obtained by the microwave treatment have been admixed with dopants containing metals.

8. Process according to any of Claims 1 to 7, **characterized in that** the silicon granules obtained by the microwave treatment are ground and optionally classified, and the fine fraction is returned to the agglomeration zone.

9. Use of the silicon granules obtainable according to any of Claims 1 to 8 for the preparation of silicon single crystals.

10. Use of the silicon granules obtainable according to any of Claims 1 to 8 for the preparation of multicrystalline silicon blocks.

11. Use of the silicon granules obtainable according to any of Claims 1 to 8, optionally after grinding and classifying, for reaction with hydrogen chloride or halogenated hydrocarbons RX in the temperature range 150-700°C in fluidized beds or shaft furnaces.

## Revendications

1. Procédé pour l'agglomération de poudres de silicium, **caractérisé en ce que** la poudre de silicium est chauffée à une température d'au moins 300°C sous l'effet d'un rayonnement micro-onde dans le domaine de longueurs d'onde de 0,5 kHz à 300 GHz de sorte que l'on obtient des granulés de silicium densifiés de porosité variable.

2. Procédé selon la revendication 1, **caractérisé en ce qu'**une fine poussière de silicium ayant une taille de particules inférieure à 600 µm sert de produit de départ.

3. Procédé selon l'une des revendications 1 et 2, **caractérisé en ce que** les granulés de silicium ont une taille de grain d'au moins 30 µm.

4. Procédé selon l'une des revendications 1 à 3, **caractérisé en ce que** le traitement thermique est réalisé dans un lit agité mobile, un mélangeur excentrique, un tube rotatif ou un lit fluidisé avec des dispositifs situés à l'intérieur ou à l'extérieur pour introduire un rayonnement électromagnétique.

5. Procédé selon l'une des revendications 1 à 4, **caractérisé en ce que** le traitement thermique a lieu dans un réacteur constitué par un matériau transparent pour les micro-ondes et/ou réfléchissant les micro-ondes.

6. Procédé selon l'une des revendications 1 à 5, **caractérisé en ce que** la poudre de silicium a été additionnée de substances de dopage contenant des métaux avant le traitement avec des micro-ondes.

7. Procédé selon l'une des revendications 1 à 6, **caractérisé en ce que** les granulés de silicium obtenus par le traitement avec des micro-ondes ont été additionnés de substances de dopage contenant des métaux.

8. Procédé selon l'une des revendications 1 à 7, **caractérisé en ce que** les granulés de silicium obtenus par le traitement avec des micro-ondes sont broyés et éventuellement tamisés, et la portion fine est renvoyée dans la zone d'agglomération.

9. Utilisation des granulés de silicium pouvant être obtenus selon l'une des revendications 1 à 8 pour la production de monocristaux de silicium.

10. Utilisation des granulés de silicium pouvant être obtenus selon l'une des revendications 1 à 8 pour la production de blocs de silicium polycristallins.

11. Utilisation des granulés de silicium pouvant être obtenus selon l'une des revendications 1 à 8, éventuellement après broyage et tamisage, pour la réaction avec le chlorure d'hydrogène ou des hydrocarbures halogénés du type RX dans le domaine de température de 150-700°C dans des lits fluidisés ou des fours à cuve.
